(19) Europäisches Patentamt
European Patent Office
Office européen des brevets

(11) Publication number: **0 198 298**
**A1**

(12) **EUROPEAN PATENT APPLICATION**

(21) Application number: **86104300.8**

(22) Date of filing: **27.03.86**

(51) Int. Cl.⁴: **A 01 N 43/70**
// (A01N43/70, 37:32)

(30) Priority: **29.03.85 JP 67159/85**
**29.03.85 JP 67160/85**

(43) Date of publication of application: **22.10.86**
**Bulletin 86/43**

(84) Designated Contracting States: **CH DE FR GB LI NL**

(71) Applicant: **SUMITOMO CHEMICAL COMPANY, LIMITED,**
**15 Kitahama 5-chome Higashi-ku, Osaka-shi**
**Osaka 541 (JP)**

(72) Inventor: **Sato, Ryo, 10-3-334,**
**Sonehigashi-machi 2-chome, Toyonaka-shi Osaka-fu (JP)**
Inventor: **Morita, Kouichi, 11-7-406,**
**Sonehigashi-machi 2-chome, Toyonaka-shi Osaka-fu (JP)**

(74) Representative: **VOSSIUS & PARTNER,**
**Siebertstrasse 4 P.O. Box 86 07 67,**
**D-8000 München 86 (DE)**

(54) **Herbicidal composition.**

(57) A herbicidal composition which comprises as the active ingredients (a) a compound of the formula:

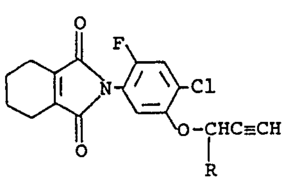

wherein R is a hydrogen atom or a methyl group and (b) an s-triazine compound of the formula:

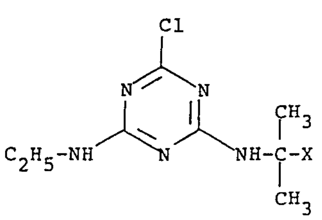

wherein X is a hydrogen atom or a cyano group, and an inert carrier or diluent. Said composition exerts a synergistic herbicidal effect.

**EP 0 198 298 A1**

# HERBICIDAL COMPOSITION

The present invention relates to a herbicidal composition. More particularly, it relates to a herbicidal composition comprising as the active ingredients (a) an isoindole compound of the formula:

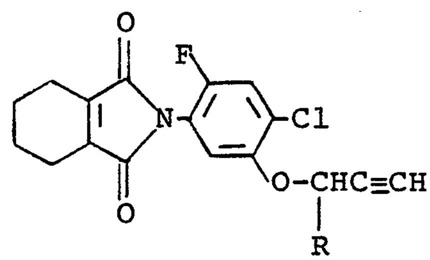

(I)

wherein R is a hydrogen atom or a methyl group, of which specific examples are those of the following formulas:

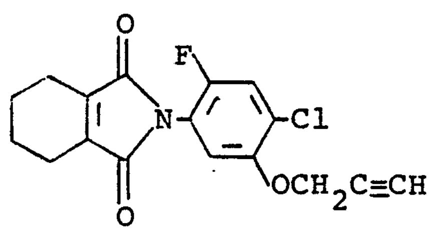

(1)

and

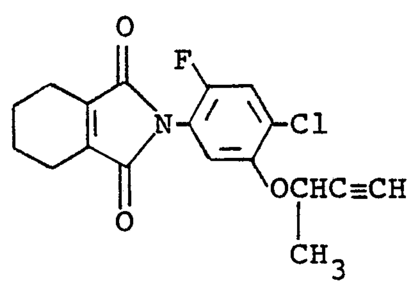

(2)

and (b) an s-triazine compound of the formula:

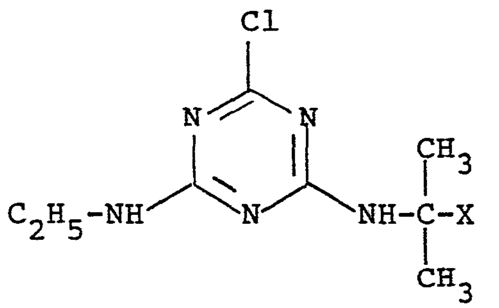

(II)

wherein X is a hydrogen atom or a cyano group, of which specific examples are those of the following formulas:

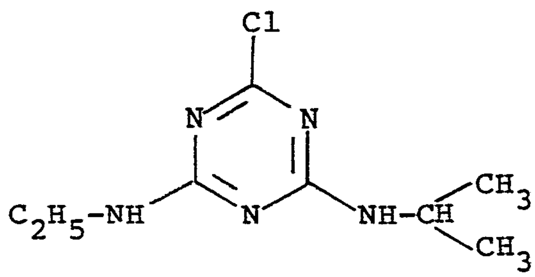

atrazine

and

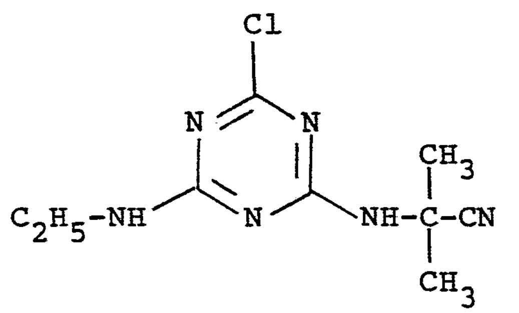

cyanazine

, which exerts a highly enhanced herbicidal activity against a wide variety of weeds without causing any material phytotoxicity to crop plants, particularly to corn and wheat.

In recent years, there have been used a great number of chemicals having herbicidal activities in order to exterminate or control the undesired vegetation of weeds. Since, however, weeds are diversified in kinds and grow over

a long period of time, the herbicidal effects of conventional herbicidal agents are restricted in general. In view of such situation, the appearance of any herbicidal agent which exerts a strong herbicidal activity against a wide variety of weeds without any material phytotoxicity to crop plants has been highly demanded.

As a result of the extensive study, it has now been found that the associated use of Compound (I) with Compound (II) by pre-emergence or post-emergence application produces a highly enhanced herbicidal activity against a wide variety of weeds without causing any material phytotoxicity to crop plants, particularly to corn or wheat. In comparison with the sole use of each of said active ingredients, enhancement of the herbicidal potency on such associated use is remarkable so that the active ingredients may be applied in smaller dosages. Further, the weed-control spectrum is greatly enlarged. Thus, a clear and definite synergistic effect is observed in said associated use.

The herbicidal composition of the invention can exterminate or control a variety of weeds, i.e. dicotyledonous weeds such as wild buckwheat (Polygonum convolvulus), pale smartweed (Polygonum lapathifolium), common purslane (Portulaca oleracea), common chickweed (Stellaria media), common lambsquarters (Chenopodium album), redroot pigweed (Amaranthus retroflexus), wild mustard (Sinapis arvensis), hemp sesbania (Sesbania exaltata), sicklepod (Cassia obtusifolia), velvetleaf (Abutilon theophrasti), prickly

sida (*Sida spinosa*) and field pansy (*Viola arvensis*); Ipomoea plants such as tall morningglory (*Pharbitis purpurea*), black nightshade (*Solanum nigrum*), persian speedwell (*Veronica persica*), common cocklebur (*Xanthium strumarium*), scentless chamomile (*Matricaria perforata*) and corn marigold (*Chrysanthemum segetum*); monocotyledonous weeds such as green foxtail (*Setaria viridis*), southern crabgrass (*Digitaria ciliaris*), goosegrass (*Eleusine indica*), barnyardgrass (*Echinochloa crus-galli*), johnsongrass (*Sorghum halepense*), quackgrass (*Agropyron repens*), annual bluegrass (*Poa annua*) and blackgrass (*Alopeculus myosuroides*), etc.

Compound (I) is known to exert a herbicidal activity [U.S. patent 4,484,941]. Compound (II) is known per se as a herbicide [Herbicide Handbook of the Weed Science Society of America, 5th Ed., p.30 and P.119 (1983)]. However, the associated use of Compound (I) with Compound (II) has never been attempted, and the production of said synergistic effect on such associated use has never been expected.

The weight proportion of Compound (I) and Compound (II) in the composition of the invention may vary in a considerably broad range and is usually 1 : 2 to 200, preferably 1 : 4 to 100.

In addition to the above active ingredients, the composition may contain a solid or liquid carrier or diluent. Any surface active or auxiliary agent may be also contained therein. Thus, the composition may be formulated in any conventional preparation form such as emulsifiable

concentrate, wettable powder, suspension or granule. The total content of the active ingredients, i.e. Compound (I) and Compound (II), may be from 0.5 to 90 % by weight, preferably from 2 to 80 % by weight.

As the solid carrier or diluent, there may be used kaolin clay, attapulgite clay, bentonite, terra alba, pyrophyllite, talc, diatomaceous earth, calcite, wallnut-shell powder, urea, ammonium sulfate, synthetic hydrated silica, etc. Examples of the liquid carrier or diluent are aromatic hydrocarbons (e.g. xylene, methylnaphthalene), alcohols (e.g. isopropanol, ethylene glycol, cellosolve), ketones (e.g. acetone, cyclohexanone, isophorone), vegetable oils (e.g. soybean oil, cotton-seed oil), dimethylsulfoxide, acetonitrile, water, etc.

The surface active agent used for emulsification, dispersion or spreading may be any of the anionic and nonionic type of agents. Examples of the surface active agent include alkylsulfates, alkylarylsulfonates, dialkylsulfosuccinates, phosphates of polyoxyethylenealkylaryl ethers, polyoxyethylene alkyl ethers, polyoxyethylene alkylaryl ethers, polyoxyethylene polyoxypropylene block copolymers, sorbitan fatty acid esters, polyoxyethylene sorbitan fatty acid esters, etc. Examples of the auxiliary agents include ligninsulfonates, sodium alginate, polyvinyl alcohol, gum arabic, CMC (carboxymethyl cellulose), PAP (isopropyl acid phosphate), etc.

Practical embodiments of the composition are illustratively shown in the following Formulation Examples

wherein part(s) are by weight.

Formulation Example 1

Six parts of Compound (1) or Compound (2), 44 parts of atrazin, 3 parts of calcium ligninsulfonate, 2 parts of sodium laurylsulfate and 45 parts of synthetic hydrated silica are well mixed and pulverized to obtain a wettable powder.

Formulation Example 2

0.5 part of Compound (1) or Compound (2), 4.5 parts by cyanazine, 14 parts of polyoxyethylene styrylphenyl ether, 6 parts of calcium dodecylbenzenesulfonic acid, 35 parts of xylene and 40 parts of isophorone are well mixed to obtain an emulsifiable concentrate.

Formulation Example 3

0.2 part of Compound (1) or Compound (2), 1.8 parts of atrazine, 1 part of synthetic hydrated silica, 2 parts of calcium ligninsulfonate, 30 parts of bentonite and 65 parts of kaolin clay are well mixed and pulverized. The resulting powder is admixed with water and dried to obtain granules.

Formulation Example 4

Two parts of Compound (1) or Compound (2), 23 parts of cyanazine, 3 parts of polyoxyethylene sorbitan monooleate, 3 parts of CMC and 69 parts of water are mixed and pulverized until the particle size of the composition become less than 5 microns to obtain suspensions.

A composition comprising Compound (I) and Compound (II) thus formulated is useful for pre-emergence

control of undesired weeds by soil treatment or post-emergence control of undesired weeds by foliar treatment. These treatments include the application to the soil surface prior to or after the transplanting or the incorporation into the soil. The foliar treatment may be effected by spraying the composition containing Compound (I) and Compound (II) over the top of plants. The direct application may also be adopted.

In order to improve the herbicidal activity, the composition may be used with other herbicides. Besides, it may be used in combination with insecticides, acaricides, nematocides, fungicides, plant growth regulators, fertilizers, soil improvers, etc.

The dosage of the active ingredients may vary depending on prevailing weather conditions, soil involved, formulation used, mixing proportion of each active ingredient, crop and weed species, etc. In general, however, the total amount of Compound (I) and Compound (II) is within a range of about 0.3 to 40 grams, preferably 1 to 20 grams, per are. In the foliar treatment, it may be applied in an amount of 1 to 5 grams. In the soil treatment, it may be applied in an amount of 2 to 15 grams.

In case of the composition being formulated into an emulsifiable concentrate, wettable powder or suspension, it is normally diluted with water and applied over the top at a volume of about 1 to 10 liters per are to the soil or to the foliage of the crop plants or weeds which germinate or have germinated. The dilution may include, in addition

to the above mentioned surface active agent, any spreading or auxiliary agent such as polyoxyethylene resin acid esters, ligninsulfonates, abietic acid, dinaphthylmethanedisulfonates, paraffin and the like.

The practical herbicidal activity of the system of the invention will be explained in further detail with reference to the following Test Examples wherein the growth controlling percentage (%) was determined by weighing the aerial parts of the test plants (fresh weight) and making calculation according to the following equation:

$$\text{Growth controlling percentage (\%)} = \left\{ 1 - \frac{\text{Fresh weight of test plant in treated plot}}{\text{Fresh weight of test plant in untreated plot}} \right\} \times 100$$

The phytotoxicity to crop plants was visually observed.

Test Example 1

Seeds of tall morningglory were sowed in a cylindrical plastic pot (10 cm (diameter), 10 cm (height)) filled with field soil, and the test plants were grown for 21 days in outdoors. A designed amount of the composition in the form of an emulsifiable concentrate formulated as in Formulation Example 2 was diluted with water containing a spreading agent and sprayed to the foliage of the test plants at a spray volume of 10 liters per are by the aid of a small hand sprayer. After 20 days' cultivation, the growth controlling percentage was observed. The results are shown in Tables 1-1 and 1-2. At the time of treatment, the test plant was at the 3 to 4-leaf stage.

Table 1-1

| Dosage of Compound (1) (g/a) | | Growth controlling activity (%) 0 | 0.01 | 0.02 | 0.04 | 0.08 | 0.16 |
|---|---|---|---|---|---|---|---|
| Dosage of atrazine (g/a) | 0 | 0 | 5 | 22 | 41 | 75 | 94 |
| | 0.5 | 7 | 29 | 53 | 84 | 93 | 100 |
| | 1 | 29 | 60 | 80 | 95 | 100 | 100 |
| | 2 | 57 | 82 | 94 | 100 | 100 | 100 |
| | 4 | 78 | 92 | 98 | 100 | 100 | 100 |
| | 8 | 96 | 100 | 100 | 100 | 100 | 100 |

Table 1-2

| Dosage of Compound (2) (g/a) | | Growth controlling activity (%) 0 | 0.01 | 0.02 | 0.04 | 0.08 | 0.16 |
|---|---|---|---|---|---|---|---|
| Dosage of atrazine (g/a) | 0 | 0 | 6 | 13 | 39 | 72 | 93 |
| | 0.5 | 7 | 28 | 48 | 70 | 91 | 100 |
| | 1 | 29 | 55 | 73 | 93 | 99 | 100 |
| | 2 | 57 | 78 | 92 | 100 | 100 | 100 |
| | 4 | 78 | 91 | 96 | 100 | 100 | 100 |
| | 8 | 96 | 100 | 100 | 100 | 100 | 100 |

The above results were analyzed according to the isobar (i.e. equivalent efficacy line) method [Hideo Chisaka: Vol. 3, Herbicides, pages 109-116 (1981) in "Noyaku Jikkenho" (Methods in Pesticide Science) edited by Junichi Fukami et al, Soft Science Inc., Tokyo] based on the Tammes's method [Tammes, P.M.L.: Neth. J. Plant Path., 70, 73-80 (1964)]. Namely, several combinations of the compositions having different mixing ratios of Compound (1) or (2) and atrazine but exerting the same level of growth controlling effect, for example, 90 % growth control, were plotted in a graph so as to readily determine a synergistic effect,

an arithmetic effect or a competitive effect. In case of exhibiting the synergistic effect, the equivalent efficacy line as plotted is shown below the arithmetic efficacy line.

As shown in Figs. 1 and 2 of the accompanying drawing wherein the abscissa indicates the dosage of atrazine and the ordinate indicates the dosage of Compound (1) or (2), the equivalent efficacy line (i.e. solid line) of 90 % growth control of tall morningglory is located under the arithmetic efficacy line (i.e. dotted line), from which it is understood that the associated use of Compound (1) or (2) and atrazine in a certain mixing ratio produces the synergistic effect.

Test Example 2

Seeds of velvetleaf, redroot pigweed, black nightshade, tall morningglory, hemp sesbania and corn were sowed in a vat (33 x 23 $cm^2$ (area), 11 cm (height)) filled with field soil, and the test plants were grown for 21 days in a greenhouse. A designed amount of the composition in the form of an emulsifiable concentrate formulated as in Formulation Example 2 was diluted with water containing a spreading agent and sprayed to the foliage of the test plants at a spray volume of 5 liters per are by the aid of a small hand sprayer. After 20 days' cultivation, the growth controlling percentage was observed. The results are shown in Tables 2-1 and 2-2. At the time of treatment, the test plants were in general at the 1 to 4.5-leaf stage, although the growing stage varied depending on each species.

Table 2-1

| Compound No. | Dosage (g/a) | Growth controlling percentage (%) | | | | | Phyto-toxicity |
|---|---|---|---|---|---|---|---|
| | | Velvet-leaf | Redroot pigweed | Black night-shade | Tall morning-glory | Hemp sesbania | Corn |
| Atrazine | 1 | 15 | 22 | 23 | 22 | 30 | None |
| Cyanazine | 1 | 19 | 15 | 26 | 24 | 33 | None |
| Compound (1) | 0.06 | 93 | 75 | 72 | 65 | 57 | None |
| Compound (1) + Atrazine | 0.06 + 1 | 100 | 100 | 100 | 98 | 98 | None |
| Compound (1) + Cyanazine | 0.06 + 1 | 100 | 98 | 100 | 99 | 100 | None |

Table 2-2

| Compound No. | Dosage (g/a) | Growth controlling percentage (%) | | | | | Phyto-toxicity |
|---|---|---|---|---|---|---|---|
| | | Velvet-leaf | Redroot pigweed | Black night-shade | Tall morning-glory | Hemp sesbania | Corn |
| Atrazine | 1 | 15 | 22 | 23 | 22 | 30 | None |
| Cyanazine | 1 | 19 | 15 | 26 | 24 | 33 | None |
| Compound (2) | 0.09 | 95 | 74 | 70 | 70 | 60 | None |
| Compound (2) + Atrazine | 0.09 + 1 | 100 | 100 | 100 | 100 | 99 | None |
| Compound (2) + Cyanazine | 0.09 + 1 | 100 | 98 | 100 | 100 | 100 | None |

Test Example 3

Seeds of barnyardgrass, green foxtail, velvetleaf, tall morningglory, black nightshade, sicklepod and corn were sowed in a vat (33 x 23 $cm^2$ (area), 11 cm (height)) filled with field soil and covered with the soil of 1 to 2 cm thick. A designed amount of the composition in the form of a wettable powder formulated as in Formulation Example 1 was diluted with water and sprayed to the soil surface at a spray volume of 10 liters per are by the aid of a small hand sprayer. After 20 days' cultivation in a greenhouse, the growth controlling percentage was observed. The results are shown in Tables 3-1 and 3-2.

Table 3-1

| Compound No. | Dosage (g/a) | Growth controlling percentage (%) | | | | | | Phyto-toxicity |
|---|---|---|---|---|---|---|---|---|
| | | Barn-yard-grass | Green foxtail | Velvet-leaf | Tall morning-glory | Black night-shade | Sickle-pod | Corn |
| Atrazine | 8 | 25 | 20 | 35 | 44 | 45 | 40 | None |
| Cyanazine | 8 | 33 | 34 | 41 | 42 | 35 | 30 | None |
| Compound (1) | 1 | 30 | 24 | 97 | 39 | 84 | 33 | None |
| Compound (1) + Atrazine | 1 + 8 | 92 | 90 | 100 | 100 | 100 | 96 | None |
| Compound (1) + Cyanazine | 1 + 8 | 98 | 98 | 100 | 100 | 100 | 95 | None |

Table 3-2

| Compound No. | Dosage (g/a) | Growth controlling percentage (%) | | | | | | Phyto-toxicity |
|---|---|---|---|---|---|---|---|---|
| | | Barn-yard-grass | Green foxtail | Velvet-leaf | Tall morning-glory | Black night-shade | Sickle-pod | Corn |
| Atrazine | 8 | 25 | 20 | 35 | 44 | 45 | 40 | None |
| Cyanazine | 8 | 33 | 34 | 41 | 42 | 35 | 30 | None |
| Compound (2) | 1 | 29 | 26 | 94 | 38 | 86 | 30 | None |
| Compound (2) + Atrazine | 1 + 8 | 90 | 91 | 100 | 100 | 100 | 95 | None |
| Compound (2) + Cyanazine | 1 + 8 | 93 | 96 | 100 | 98 | 100 | 95 | None |

Test Example 4

Seeds of common chickweed, wild mustard, persian speedwell, wild buckwheat and wheat were sowed in a vat (33 x 23 $cm^2$ (area), 11 cm (height)) filled with field soil and covered with the soil of 1 to 2 cm thick. A designed amount of the composition in the form of a wettable powder formulated as in Formulation Example 1 was diluted with water and sprayed to the soil surface at a spray volume of 10 liters per are by the aid of a small hand sprayer. After 27 days' cultivation in a greenhouse, the growth controlling percentage was observed. The results are shown in Tables 4-1 and 4-2.

Table 4-1

| Compound No. | Dosage (g/a) | Growth controlling percentage (%) | | | | Phyto-toxicity |
|---|---|---|---|---|---|---|
| | | Common chick-weed | Wild mustard | Persian speed-well | Wild buck-wheat | Wheat |
| Atrazine | 2 | 55 | 43 | 26 | 21 | None |
| Compound (1) | 0.25 | 37 | 40 | 72 | 66 | None |
| Compound (1) + Atrazine | 0.25 + 2 | 100 | 98 | 100 | 100 | None |

Table 4-2

| Compound No. | Dosage (g/a) | Growth controlling percentage (%) | | | | Phyto-toxicity |
|---|---|---|---|---|---|---|
| | | Common chick-weed | Wild mustard | Persian speed-well | Wild buck-wheat | Wheat |
| Atrazine | 2 | 55 | 43 | 26 | 21 | None |
| Compound (2) | 0.25 | 35 | 42 | 71 | 62 | None |
| Compound (2) + Atrazine | 0.25 + 2 | 98 | 98 | 100 | 100 | None |

What is claimed is:

1. A herbicidal composition which comprises as the active ingredients (a) a compound of the formula:

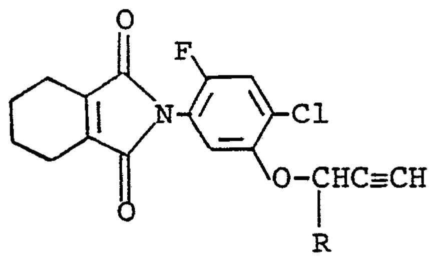

wherein R is a hydrogen atom or a methyl group and (b) an s-triazine compound of the formula:

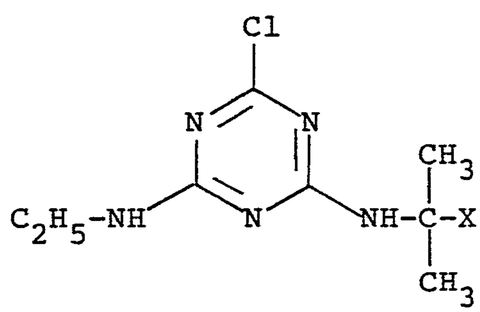

wherein X is a hydrogen atom or a cyano group, and an inert carrier or diluent.

2. The composition according to claim 1, wherein the weight proportion of the components (a) and (b) is from 1 : 2 to 200.

3. A method for controlling weeds which comprises applying a herbicidally effective amount of the composition according to claim 1 to the weeds.

4. The method according to claim 3, wherein the weeds are those germinated in the field of corn or wheat.

5. The method according to claim 3, wherein the total amount of the components (a) and (b) is from 0.3 to 40 grams per are.

*Fig. 1*

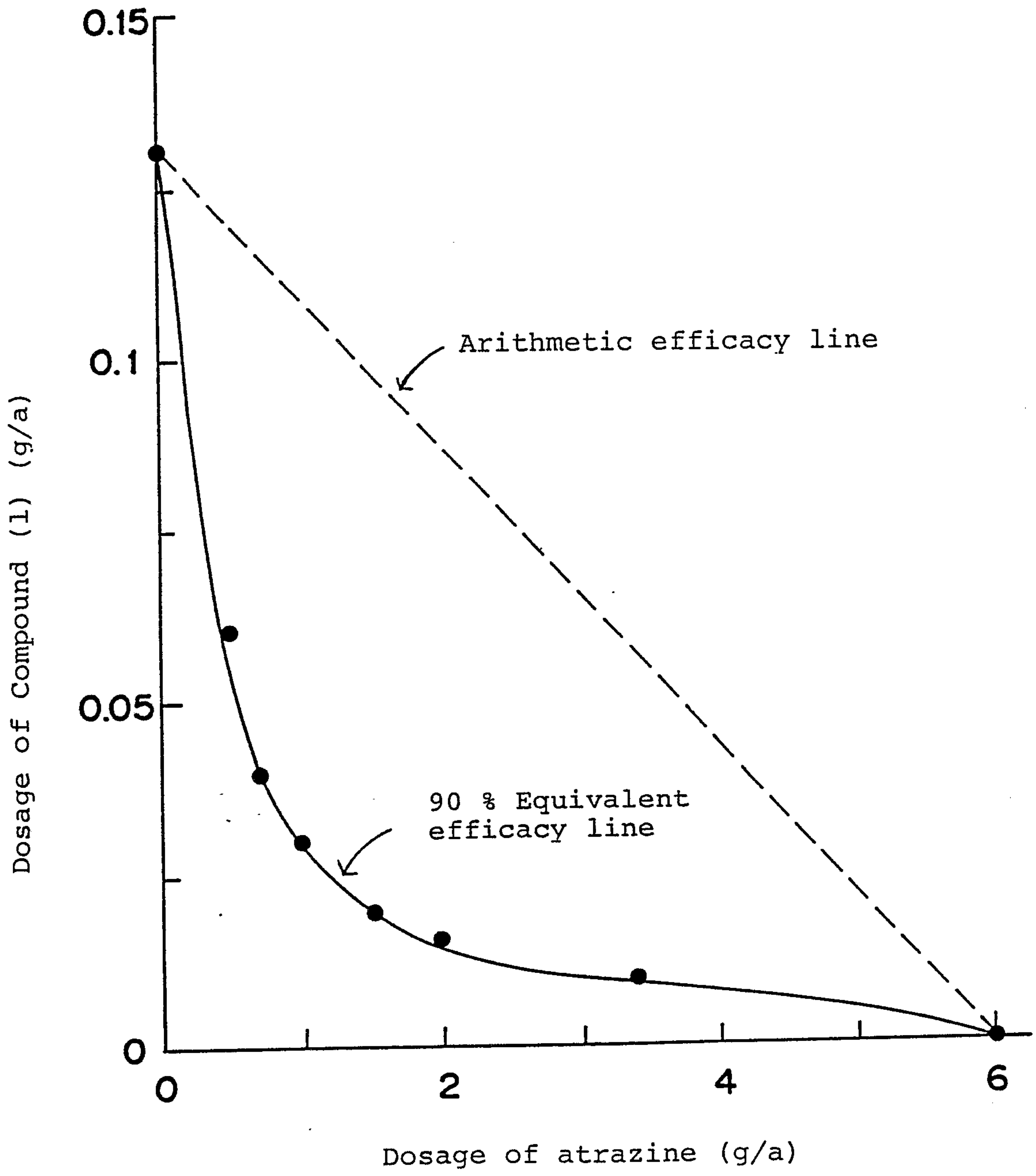
0.15
0.1
0.05
0
Dosage of Compound (1) (g/a)
Arithmetic efficacy line
90 % Equivalent
efficacy line
0
2
4
6
Dosage of atrazine (g/a)

*Fig. 2*

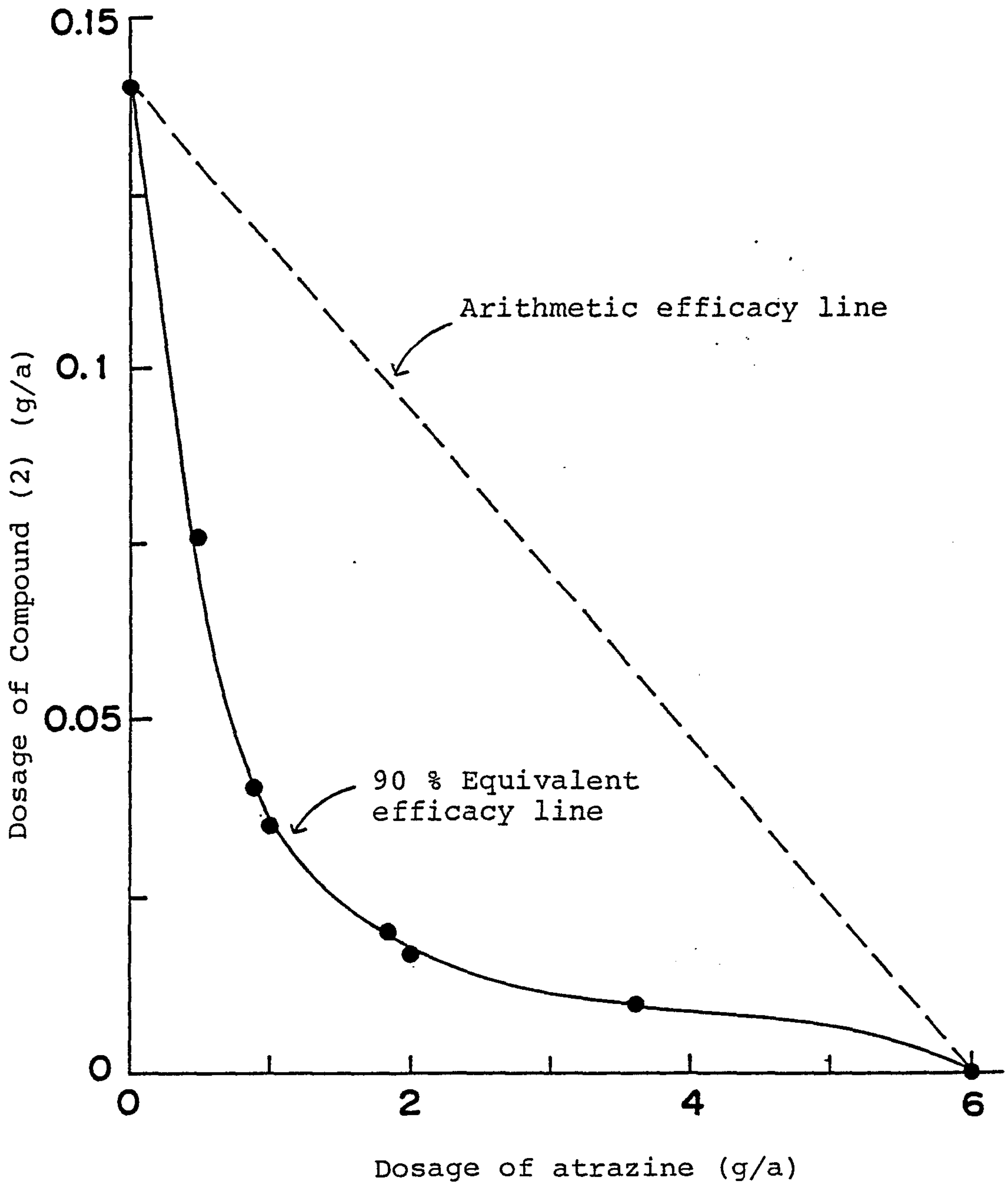

0.15
0.1
0.05
0
Dosage of Compound (2) (g/a)
Arithmetic efficacy line
90 % Equivalent efficacy line
0
2
4
6
Dosage of atrazine (g/a)

European Patent Office

# EUROPEAN SEARCH REPORT

0198298

Application number

EP 86 10 4300

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | CENTRAL PATENTS INDEX, BASIC ABSTRACTS JOURNAL, Section C, Week 8428, 5th September 1984, abstract no. 84-173717/28, Derwent Publications Ltd., London, GB; & JP - A - 59 095 204 (SUMITOMO CHEMICAL K.K.) 01-06-1984 | 1-5 | A 01 N 43/70 // (A 01 N 43/70 A 01 N 37:32 ) |
| | --- | | |
| Y | EP-A-0 061 741 (SUMITOMO) * Claims 13-15; page 13, compound nos. 10,12; page 24, paragraph 3 * & US - A - 4 484 941 (Cat. D) | 1-5 | |
| | ----- | | |
| | | | TECHNICAL FIELDS SEARCHED (Int. Cl.4) |
| | | | A 01 N |

The present search report has been drawn up for all claims

| Place of search | Date of completion of the search | Examiner |
|---|---|---|
| THE HAGUE | 08-08-1986 | DECORTE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82